# FASCICULE DE BREVET EUROPEEN

(11) **EP 0 625 311 B1**
(45) Date de publication et mention de la délivrance du brevet: **16.12.1998**
(21) Numéro de dépôt: 94401066.9
(22) Date de dépôt: 11.05.1994
(51) Int. Cl.: A23G 3/00, A23G 3/20, A23G 3/26

(54) **Procédé de dragéification dure sans sucre**
Mit harten Beschichtungszusammensetzung Dragierverfahren ohne Zucker
Sugar-free, hard-coating-process

(30) Priorité: 17.05.1993 FR 9305917
(43) Date de publication de la demande: 23.11.1994
(73) Titulaire: Roquette Frères, 62136 Lestrem (FR)
(72) Inventeur: Serpelloni, Michel, F-62660 Beuvry Les Bethune (FR); Ribadeau-Dumas, Guillaume, F-59130 Lambersart (FR)
(74) Mandataire: Boulinguiez, Didier

(56) Documents cités:
- EP-A- 0 201 412
- EP-A- 0 228 999
- WO-A-88/08671
- FR-A- 1 137 104
- FR-A- 2 464 656
- FR-A- 2 467 597
- US-A- 4 238 510
- DATABASE WPI Derwent Publications Ltd., London, GB; AN 87-003714 & JP-A-61 263 915 (HAYASHIBARA BIOCHEM.) 21 Novembre 1986

## Description

La présente invention a pour objet un procédé amélioré de dragéification dure utilisant un polyol à l'état pulvérulent et permettant la création aisée et rapide d'un revêtement dur à la surface d'un produit.

Les polyols concernés par la présente invention sont des sucre-alcools choisis dans le groupe comprenant le sorbitol, le maltitol, le mannitol, le xylitol, l'érythritol, le lactitol et l'isomalt. Ces produits sont obtenus industriellement, respectivement par hydrogénation de D-glucose, de maltose, de fructose ou levulose, de xylose, d'érythrose, du lactose et d'isomaltulose.

De saveur sucrée généralement inférieure à celle attribuée au saccharose, qu'ils tendent à remplacer en alimentation humaine mais également dans les formulations pharmaceutiques et diététiques, les polyols présentent l'avantage de n'être pas cariogènes et de posséder une valeur calorique estimée à un tiers environ inférieure à celle du sucre.

Ces polyols sont tous commercialisés sous forme pulvérulente, avec un degré de pureté variable. Dans le cas particulier de l'isomalt qui correspond à un mélange équimoléculaire d'alpha-D-glucopyranosyl- 1-6-sorbitol et d'alpha-D-glucopyranosyl 1-6-mannitol, la notion de pureté bien qu'elle n'a aucun sens chimique, sera étendue par commodité dans la présente invention. Elle correspondra à la somme des quantités des molécules isomères données ci-dessus ramenée à la matière sèche de la poudre considérée. Les poudres d'isomalt du commerce présenteront ainsi une pureté au sens de l'invention supérieure à 95 %.

Parmi les polyols ci-dessus, seul à ce jour le sorbitol est commercialisé sous forme de sirops de haute pureté. L'explication tient au fait que la solubilité de ce polyol est très élevée comparativement aux autres polyols cités. De tels sirops de sorbitol de très haute pureté sont par exemple vendus par la Demanderesse sous la marque NEOSORB^{R} 70/05 et NEOSORB^{R} 70/02. Le procédé tel que décrit ci-après pourra s'appliquer indifféremment à l'un ou à l'autre des polyols cités plus haut.

La dragéification dure est une opération unitaire employée dans bon nombre de domaines parmi lesquels ceux de la confiserie et de la pharmacie. Elle peut concerner également l'industrie des additifs que sont les arômes, les édulcorants, les vitamines, les enzymes, les acides et les produits à base de plantes. Cette opération consiste à créer un revêtement dur à la surface de produits solides ou pulvérulents, afin de les protéger pour diverses raisons ou bien afin de les rendre attractifs visuellement ou gustativement.

La dragéification dure vise à obtenir une couche croustillante et sucrée, toujours très appréciée dans le cas de confiseries ou de chewing-gums.

Elle nécessite toujours l'utilisation d'un sirop contenant des matières cristallisables. Le revêtement dur et cristallin s'obtient alors par application de ce sirop et évaporation de l'eau apportée par celui-ci grâce à un séchage par air chaud et sec. Ce cycle doit être répété un très grand nombre de fois de l'ordre de dix à quatre vingt fois afin d'obtenir le taux de grossissage voulu.

On appelera taux de grossissage l'accroissement en poids des produits, considérés en fin d'opération par rapport au début, rapporté au poids final des produits.

La dragéification dure peut être précédée par d'autres techniques d'enrobage. On retiendra en particulier les techniques suivantes :
- le gommage (ou vernissage) qui est une technique dans laquelle sont utilisés des sirops de matières non cristallisables et en général non hygroscopiques comme les gommes arabiques, les amidons et les celluloses modifiés, les maltodextrines. Cette technique permet, après une ou deux applications du sirop sur le produit à revêtir, de créer un film vitreux faisant barrière à la migration de l'oxygène, de l'eau ou des matières grasses. Dans ce procédé peuvent également être employées conjointement à ces sirops non cristallisables, des poudres de diverse nature, de façon à fixer l'eau apportée par les sirops. Dans d'autres cas encore, on emploie des sucres ou des polyols fondus ou liquéfiés par des solvants. Le revêtement vitreux, dur et cassant, est obtenu alors par refroidissement ou par évaporation des solvants.
- la dragéification tendre qui consiste à créer un revêtement très souple et tendre à la surface des produits. Ce revêtement est obtenu par application répétées d'une part d'un sirop non cristallisable comme en général les hydrolysats d'amidons, et d'autre part d'une poudre, en général du saccharose cristallisé. Le revêtement est habituellement épais. Le taux de grossissage pour cette technique est de l'ordre de 10 à 80 % voire davantage. Il est à noter que la matière constitutive du sirop est habituellement différente de celle de la poudre.

Le terme dragéification dure employé dans la présente invention comprendra également les techniques très voisines que sont le lissage et le givrage.

Le lissage consiste en une ou deux applications ou charges d'un sirop cristallisable dilué par rapport à celui utilisé en dragéification dure. Le but est souvent de parfaire l'aspect de surface de produits dragéifiés.

Le givrage quant à lui vise également à améliorer l'aspect des produits, mais aussi à isoler ces derniers de l'humidité de l'atmosphère. Cette technique ressemble à une dragéification dure, en ce sens qu'un sirop cristallisable est utilisé. La différence essentielle réside dans le fait que le nombre de cycles réalisés n'est que d'un, deux ou trois seulement.

On s'intéressera dans le cadre de la présente invention à la dragéification dure proprement dite, au lissage, au givrage ainsi qu'à ces techniques combinées. Une dragéification dure sera souvent suivie d'un lissage.

Plusieurs de ces procédés d'enrobage ont été appliqués en utilisant des polyols tels le sorbitol, le mannitol, le xylitol, les hydrolysats d'amidon hydrogénés, le maltitol, le lactitol, l'érythritol et l'isomaltulose hydrogéné. Ils sont abondamment décrits dans la littérature. On peut les classer en deux grandes catégories.

Un premier groupe de procédés est couramment employé industriellement en particulier pour le sorbitol et le xylitol. Ces procédés s'apparentent à une dragéification dure et consistent à appliquer à la surface des produits que l'on souhaite dragéifier, en général des confiseries, un sirop ou une suspension cristallisable. Il faut entendre par le mot cristallisable le fait que le sirop ou la suspension de polyol appliqué à la surface des produits, est suffisamment riche en l'un ou l'autre des polyols donnés ci-dessus de sorte que par évaporation d'eau, au moyen d'air dans les turbines de dragéification, on obtienne un revêtement de nature cristalline. De tels procédés ont été décrits bon nombre de fois. On citera à titre d'exemple le brevet EP 37 407 dont la Demanderesse est titulaire et qui concerne le sorbitol. On retiendra également le brevet EP 201 412 dont la Demanderesse est également titulaire et les brevets EP 273 000 et US 4 792 453 qui traitent respectivement de l'utilisation de maltitol, de xylitol et d'isomalt en dragéification dure.

Ces procédés se caractérisent par le fait qu'ils comprennent un grand nombre de cycles à la manière du procédé traditionnel avec sucre. Chacun de ces cycles répétitifs comporte toujours une première étape de pulvérisation du sirop de polyol sur le lit en mouvement de produits à dragéifier, une second étape permettant la répartition homogène de ce sirop à la surface des produits et enfin une troisième étape de séchage par soufflage d'air chaud et sec, assurant l'évaporation de l'eau apportée par le sirop et donc la cristallisation du polyol appliqué.

On comprend alors très bien que ces procédés souffrent de façon générale de leur extrême lenteur. Ceci s'explique par le fait qu'il est obligatoire, faute d'observer une prise en masse des produits devant rester individualisés, de pulvériser un grand nombre de fois et de manière espacée dans le temps des quantités très faibles de sirop. Ces quantités sont de l'ordre de 10 à 30 grammes par kilogramme de produits à revêtir, ce qui correspond à une quantité apportée en polyol comprise entre 6 et 20 grammes par kilogramme de produits. Ainsi pour accroître le poids des articles de l'ordre de 20 %, plusieurs heures voire plusieurs jours sont nécessaires.

Certes, on remédie à ce grave inconvénient soit en augmentant la capacité des turbines de dragéification, soit en automatisant les installations en place de façon à écourter au maximum chacune des séquences de pulvérisation, de répartition et de séchage, soit encore en augmentant le parc industriel de turbines. On comprend fort bien que ces remèdes ne sont que très partiels car ils n'éliminent pas le problème à la source, et se traduisent forcément par des surcoûts non négligeables.

Un autre grave inconvénient de ces procédés réside dans le fait qu'ils nécessitent lors de chaque cycle comme indiqué plus haut une étape de séchage par soufflage d'air sec et chaud, consommatrice d'énergie mais surtout de temps. En effet, cette étape dure environ la moitié du temps nécessaire à la réalisation d'un seul cycle. Réduire en durée cette étape de séchage est difficile voire impossible étant donné qu'elle est incontournable pour obtenir le séchage de couches successives obtenues, et par conséquent préparer des revêtements cristallins et durs.

Il existe une deuxième catégorie de procédés de dragéification aux polyols, qui allient l'emploi d'un sirop et celui d'une poudre. Il est à noter que le polyol présent majoritairement dans les sirops peut être ou non différent par nature du polyol présent à titre principal dans la poudre.

Cette catégorie de procédés, qui s'apparente plutôt à une dragéification tendre, diffère encore largement de l'invention décrite en détail ci-après.

De tels procédés sont très bien décrits dans la littérature. On retiendra en particulier les procédés dévoilés :
- par le brevet US 4 238 510 concernant un revêtement contenant de 45 % à 90 % de sorbitol ; l'enrobage des produits de confiserie est obtenu moyennant un séchage par air sec et chaud en turbine et application d'un sirop de polyol et d'un mélange de poudres de sorbitol et de mannitol. Ce procédé est toujours très long puisqu'il demande plusieurs journées. De plus, il ne permet de préparer que des revêtements de surface tendres, jamais durs et croustillants comme ils sont en général souhaités des consommateurs.
- par la demande de brevet WO 91/09989, concernant un enrobage par du sorbitol. Le procédé tel que décrit, bien qu'il ressemble à un procédé de dragéification tendre, ne se donne comme réel objectif que celui d'obtenir des couches dragéifiées hautement cristallines, dures et cassantes à la manière de celles décrites dans le brevet EP 37 407 de la Demanderesse cité plus haut. La nécessité de sécher lors de chacun des multiples cycles de dragéification fait que le procédé, bien que susceptible de générer des gains de temps importants, n'est pas encore entièrement satisfaisant.

Forte de ce constat, la Demanderesse s'est aperçue que l'on recherchait toujours à mettre au point un procédé de dragéification dure, utilisant avantageusement les polyols en tant qu'agents de remplacement du sucre, qui n'aurait pas les inconvénients décrits ci-avant, c'est à dire présenterait tous les avantages suivants :
- celui d'être très rapide et de permettre de ce fait des gains de temps considérables et donc des gains de capacité importants,
- celui d'être simple à mettre en place industriellement,
- celui de permettre la préparation de produits dragéifiés de très haute qualité, non collants et n'évoluant pas en aspect ou en texture de manière significative au cours du temps.

Désireuse d'améliorer l'état de la technique, avec la volonté de rendre économe en temps et en énergie les procédés connus permettant la création de revêtements durs et cristallins, sans que pour autant la qualité des produits finaux en soit abaissée, la Demanderesse a constaté de façon surprenante et inattendue que l'on pouvait, moyennant une attente avant conditionnement des produits de quelques heures seulement, obtenir des revêtements extrêmement durs et cassants, et également croustillants sous la dent, ceci sans avoir besoin de procéder lors de chaque cycle de dragéification à une étape de séchage par soufflage d'air, contrairement à ce que l'homme du métier a coutume de réaliser et à ce qu'il eût été logique de faire en suivant les recommandations données dans l'art antérieur, afin d'obtenir un tel résultat.

On y parvient par la combinaison, lors de chaque cycle, d'une poudre de polyol d'une très haute pureté et d'un sirop cristallisable contenant le même polyol à titre majoritaire par rapport à sa matière sèche soluble. Ainsi, le procédé conforme à l'invention est écourté par rapport à ceux de l'art antérieur étant donné que les multiples étapes de séchage par flux d'air chaud et sec, consommatrices de temps et d'énergie, ne sont plus nécessaires. Le gain obtenu est d'autant plus important que le taux de grossissage souhaité est élevé.

Pour obtenir un résultat qualitatif satisfaisant, c'est à dire des revêtements non collants présentant une bonne adhérence aux produits revêtus et également stables au cours du temps, la Demanderesse a constaté qu'il convenait d'employer d'une part un sirop, contenant par rapport à sa matière sèche soluble, plus de 90 % d'un polyol et d'autre part une poudre présentant en ce même polyol une pureté supérieure à 95 %.

La présente invention concerne donc un procédé de dragéification dure, lissage ou gommage, permettant la création par utilisation d'une turbine, d'un revêtement dur et croustillant à la surface d'un produit et comportant au moins un cycle comprenant :
- une étape d'application d'un sirop composé par rapport à sa matière sèche soluble, d'au moins 90 % en poids d'un polyol choisi parmi le sorbitol, le maltitol, le mannitol, le xylitol, l'érythritol et l'isomalt,
- au moins une étape d'application sous forme pulvérulente d'une poudre d'une pureté supérieure à 95 % en poids en ce même polyol, lesdites étapes d'application étant menées dans un ordre quelconque,
- puis une étape de répartition du sirop et de la poudre appliqués ; le procédé étant caractérisé en ce que ce cycle ne comprend pas d'étape de séchage forcé par un flux d'air.

La poudre appliquée présente une pureté de préférence supérieure à 98 % et plus préférentiellement supérieure à 99 %. De tels produits sont commercialisés. On connaît par exemple, les poudres vendues sous les marques NEOSORB^{R} pour le sorbitol, XYLISORB^{R} pour le xylitol, PALATINIT^{R} pour l'isomalt, MALTISORB^{R} pour le maltitol, PEARLITOL^{R} pour le mannitol et LACTY^{R} pour le lactitol.

En ce qui concerne les sirops de polyols, on peut utiliser dans le cas du sorbitol directement le produit commercialisé sous la marque NEOSORB^{R} 70/05 et mieux encore le produit NEOSORB^{R} 70/02. Dans tous les cas, le sirop appliqué peut être préparé à partir de la poudre de polyol appliquée convenant au procédé suivant l'invention.

Selon un mode général de l'invention, les produits à revêtir sont soumis à un turbinage c'est-à-dire un mouvement de rotation dans une turbine de dragéification. Celle-ci peut avoir une forme ordinaire, c'est à dire une forme en tulipe avec un axe de révolution incliné ou bien une forme cylindrique avec un axe horizontal. Les produits, de préférence alors toujours dépoussiérés, antérieurement ou postérieurement à leur introduction dans la turbine, présentent de préférence une forme sphérique, cylindrique ou ovale afin de faciliter l'opération d'enrobage mais peuvent tout aussi bien avoir une forme en coussinet ou de pastille.

Le procédé conforme à l'invention permet d'enrober des produits très divers. Il peut s'agir de produits alimentaires comme par exemple des confiseries telles que des chewing-gums, des comprimés, des lozenges, des gelées, des oeufs liqueur, des pâtes à mâcher, des bonbons durs, des produits chocolatés mais aussi des produits pharmaceutiques ou vétérinaires comme les pilules, les tablettes, des produits pour animaux, des produits diététiques telles que les granulés de plantes, des semences ou des graines, des poudres d'engrais agglomérées ou encore des additifs à base d'enzymes ou de microorganismes destinés en particulier dans la fabrication de denrées alimentaires comme le pain ou de produits industriels comme les lessives, des additifs pulvérulents composés de vitamines, d'arômes, de parfums, d'acides, d'édulcorants ou de principes actifs divers.

Selon un mode général de réalisation de l'invention, le procédé consiste à humidifier de façon homogène la surface des produits en mouvement à l'aide de sirop de polyol choisi. Il est à noter que ces produits pourront être éventuellement gommés préalablement selon les techniques classiques. On ajoute ensuite sous forme pulvérulente une quantité de poudre du même polyol de haute pureté. Après répartition de la poudre, un nouveau cycle humidification-apport de poudre peut être réalisé. Dans ce cas, le second cycle est de préférence espacé de quelques minutes du premier cycle afin de permettre l'assèchement de la surface des produits. Il est à noter que le procédé conforme à l'invention nécessite au moins une, mais de préférence deux applications, sous forme pulvérulente, d'une poudre de polyol de haute pureté. Ces applications peuvent être réalisées lors d'un même cycle ou bien lors de cycles différents sachant qu'un cycle est défini dans la présente invention comme ne comprenant qu'une seule application du sirop de polyol.

Le procédé conforme à l'invention dans son mode général est toujours nettement plus court que les procédés de l'art antérieur. Par exemple, des taux de grossissage très élevés voisins de 50 % peuvent être obtenus en moins de trois heures. Pour des taux plus faibles, de l'ordre de 20 %, il faut compter au maximum un temps inférieur de moitié, et en général, 1 heure environ, soit 6 fois moins que les procédés de l'art antérieur utilisant uniquement un sirop cristallisable.

En ce qui concerne la poudre de polyol de haute pureté à employer, on préfère utiliser des poudres fines, présentant moins de 10 % de particules de diamètre supérieur à 250 microns et moins de 10 % de particules de diamètre inférieur à 40 microns . Une poudre idéale possède un diamètre moyen compris entre 80 et 100 microns.

La température du sirop est en général celle de l'ambiance, mais afin d'obtenir une grande régularité de la répartition du sirop, on peut choisir une température plus élevée permettant d'abaisser à moins de 300 centipoises la viscosité du sirop de revêtement.

Dans des conditions normales, la matière sèche du sirop est comprise entre 40 et 85 %, selon la température de celui-ci et la nature du polyol choisi. Ces sirops pour être idéaux pourront comprendre de 0,5 à 5 % de gélatine, de gomme arabique ou de celluloses modifiées et éventuellement 0,5 à 2 % de pigments tels le carbonate de calcium, l'oxyde de titane ou un colorant alimentaire.

On utilise toutefois toujours un sirop contenant plus de 90 %, de préférence plus de 92 % et plus préférentiellement encore plus de 95 % d'un polyol ; ces taux étant calculés par rapport à la matière sèche soluble. Ces sirops peuvent être préparés à partir d'une poudre ayant une pureté supérieure à 90 %.

Le nombre de cycle nécessaire pour enrober les produits est de 1 à 10 pour une dragéification dure, de 1 à 3 pour un lissage et de 1 à 5 pour un givrage. Chaque cycle comporte la pulvérisation de 5 à 35 millilitres d'un sirop ayant une matière sèche comprise entre 50 et 85 % dans le cas d'un givrage ou d'une dragéification dure, et la pulvérisation de 15 à 50 millilitres d'un sirop de matière sèche comprise entre 40 et 60 % dans le cas d'un lissage. Ces quantités, correspondant aux quantités utiles à chaque cycle pour enrober un kilogramme de produit, varient selon la nature de ce dernier et en particulier selon sa porosité. Les quantités de poudre de polyol, apportées durant un ou plusieurs cycles, sont en général comprises entre 5 et 70 grammes par kilogramme de produits à revêtir, les valeurs les plus faibles étant préférées lors d'un lissage.

L'étape de répartition entre deux cycles dure de préférence 5 minutes environ lors des premières applications. Ce temps pourra progressivement être réduit et atteindre seulement 2 minutes environ en fin de dragéification.

La teneur en polyol dans les revêtements durs finaux atteint 95 à 99,5 %, de préférence 98 à 99,5 % dans le cas d'un givrage ou d'une dragéification dure. Cette teneur est seulement supérieure à 80 % dans le cas d'un lissage.

En ce qui concerne la quantité de poudre de polyol apportée sous forme pulvérulente dans les revêtements des produits tels que destinés à la commercialisation, celle-ci représente en général 65 à 90 % pour un givrage et une dragéification dure, et 40 à 80 % pour un lissage.

Le procédé conforme à l'invention peut, pour un article à dragéifier choisi, précéder ou suivre une autre opération de dragéification ou d'enrobage connue de l'art antérieur. Il est également possible d'appliquer pour un même article, le procédé conforme à l'invention en retenant un premier polyol pour une partie de la couche dragéifiée puis un second polyol pour une autre partie.

En final, un lissage classique peut permettre d'améliorer l'aspect des produits. L'utilisation de corps gras ou de cires visant à imperméabiliser le revêtement tout en améliorant son aspect visuel peut également être envisagée.

La mise en oeuvre de l'invention telle que décrite ci-dessus permet d'obtenir des produits ayant un revêtement croustillant après quelques heures de stockage avant emballage. Il n'est pas forcément nécessaire de procéder à un étuvage. De préférence, les produits sont simplement stockés durant quelques heures en ambiance sèche.

De façon generale, la cristallinité du revêtement obtenir par application du procédé. selon l'invention est telle que son enthalpie de fusion est au moins égale à 70 %, et de préférence 80 %, de celle du polyol qui le compose, pris dans son état cristallin commercial le plus stable, ou le plus courant. C'est ainsi que par exemple on retiendra comme polyol de comparaison le sorbitol cristallisé sous forme gamma et le lactitol monohydrate.

Les moyens de mise en oeuvre du procédé conforme à l'invention décrits ci-dessus ne sont point limitatifs et ne se veulent seulement que relatifs à des moyens de réalisation avantageux et préférés. La flexibilité et la rapidité d'exécution du procédé ainsi que ses multiples autres avantages listés plus haut, pourront probablement être mieux appréhendés à la lumière des exemples qui suivent.

### EXEMPLE I

### Comparaison du procédé conforme à l'invention à ceux de l'art antérieur

### 1. Produits employés.

Des chewings-gums, formulés aux polyols c'est-à-dire avec un sirop LYCASIN ^{R} 80/55 et du sorbitol poudre NEOSORB ^{R} P60 et ayant une forme en coussinet de 2 centimètres de longueur pour 1 centimètre de largeur environ, sont dragéifiés selon le procédé conforme à l'invention pour obtenir des revêtements durs et croustillants.

A titre de comparaison, les mêmes produits sont dragéifiés avec du sorbitol selon les procédés décrits dans le brevet EP 037 407 (exemple 4, essai N° 16), la demande de brevet WO 91/09989 (exemple 1) et le brevet US 4 238 510 ( exemple 1).

On utilise pour réaliser l'invention :
- un sirop de sorbitol ayant une matière sèche de 70 % commercialisé sous la marque NEOSORB ^{R} 70/02.

On ajoute à ce sirop 2 % de gélatine par rapport à sa matière sèche. Ce sirop est utilisé à 60°C.
- et une poudre fine de sorbitol de très haute pureté commercialisée sous la marque NEOSORB ^{R} P100.

Pour reproduire les procédés dévoilés dans les brevets et la demande de brevet ci-dessus, on emploie :
- uniquement le sirop de sorbitol de très haute pureté NEOSORB ^{R} 70/02, à une température de 40°C dans le cas du procédé décrit dans le brevet EP 037 407.
- la poudre de sorbitol NEOSORB ^{R} P100 durant la phase de dragéification forcée, et le sirop NEOSORB ^{R} 70/02 pour préparer les suspensions AI et AII utilisées à 20°C lors des étapes de gommage, de dragéification forcée et de dragéification dure, selon le procédé décrit dans la demande de brevet WO 91/09989.
- la poudre de sorbitol NEOSORB^{R} P100 pour préparer la composition pulvérulente, et le sirop de sorbitol NEOSORB ^{R} 70/02 pour formuler les deux sirops, décrits dans le brevet US 4 238 510 ; les sirops étant maintenus à 49°C tel qu'indiqué.

### 2. Conditions

Pour réaliser l'enrobage dur et croustillant de l'invention, on place un kilogramme de coussinets de chewings-gums dans une drageuse en rotation, à une vitesse de 20 t/mn.

Le sirop de sorbitol est appliqué une première fois à raison de 15 millilitres. On ajoute après une ou deux minutes une quantité de 30 grammes de poudre de sorbitol .On laisse sécher la surface des coussinets pendant une minute sans procéder à un séchage par flux d'air.

Ce cycle est répété cinq fois, en augmentant les cadences d'application et les quantités apportées. Lors du dernier cycle, la quantité de sirop apportée est de 35 millilitres tandis que celle de poudre est de 50 grammes.

En final, les coussinets sont laissés en mouvement de rotation pendant une quinzaine de minutes. La durée totale de la dragéification est de 50 minutes, pour un taux de grossissage de 30 %.

Pour ce qui concerne les procédés de l'art antérieur :
- 60 cycles doivent être réalisés selon le procédé décrit dans le brevet EP 037 407 pour obtenir un taux de grossissage, équivalent. Le temps nécessaire est d'environ 6 heures.
- 17 cycles permettent d'obtenir un taux de grossissage voisin lorsque l'on procède comme indiqué dans la demande WO 91/09989. Le résultat est obtenu en 2 heures environ.
- 10 cycles suffisent pour obtenir un revêtement d'une épaisseur équivalente en suivant les indications contenues dans le brevet US 4 238 510, mais le temps nécessaire pour parvenir à cela est d'au moins 24 heures compte tenu de la nécessité d'arrêter l'enrobage pour sécher les couches obtenues avant de procéder à une finition.

### 3. Caractéristiques des produits obtenus.

Les croustillances et les duretés des revêtements des deux types de produits ci-dessus sont comparés 1 jour, 2 jours et 7 jours après fabrication.

### - Données organoleptiques

Les textures sous la dent des quatre types de chewing-gums dragéifiés sont appréciées par un jury de dégustations de 7 personnes par un test en aveugle.

Les chewing-gums dragéifiés selon le procédé US 4 238 510 sont jugés inacceptables car insuffisamment croustillants à la fois à 1 jour et à 7 jours.

A 1 jour, le jury décèle une légère différence entre les trois autres produits, le produit le plus satisfaisant étant celui obtenu selon le brevet EP 037 407 suivi du produit préparé selon les indications de la demande WO 91/09989. Le produit selon l'invention paraît légèrement moins dur sous la dent.

A 2 jours et à 7 jours, ces trois types de chewing-gums sont jugés tout à fait identiques.

### - Données de dureté Instron

Des indices de dureté sont mesurés à 1 jour à l'aide d'un appareil utilisant un test consistant à enfoncer un poinçon dans une dragée de chewing-gum, placée sur un plateau rigide. La force d'écrasement est enregistrée en fonction du temps jusqu'à rupture du revêtement de la dragée.

Les données de dureté obtenues corroborent les résulats énoncés ci-dessus puisque les indices de dureté sont trouvés en moyenne pour cinq mesures égales à :
- environ 5 mm -¹ pour les produits selon le brevet US 4 238 510,
- environ 15 mm -¹ pour les produits obtenus selon l'invention contre 17 mm -¹ pour les produits selon EP 037 407 et 15,5 mm -¹ pour les produits selon la demande WO 91/09989.

En d'autres termes, les produits de l'invention sont identiques après un jour à ceux de l'art antérieur. Ils peuvent être obtenus en un temps deux fois plus court que celui nécessaire en procédant selon la technique la meilleure sur ce plan de l'art antérieur. Aucun séchage n'est nécessaire.

Le procédé selon l'invention est donc très économe en temps et en énergie par rapport aux techniques décrites dans l'art antérieur.

### EXEMPLES II

### Procédé de dragéification dure selon l'invention utilisant l'isomalt, le maltitol et le xylitol.

Le procédé décrit dans l'exemple 1 est repris et utilise les mêmes chewing-gums en remplaçant la poudre et le sirop de sorbitol par :
- une poudre d'isomalt commercialisée sous la marque PALATINIT ^{R} et un sirop d'isomalt préparé à partir de celle-ci et de 1 % d'oxyde de titane, à une matière sèche de 65 %. Le sirop est appliqué à une température de 6O°C.
- une poudre de xylitol commercialisée par la Demanderesse sous la marque XYLISORB ^{R} et un sirop de xylitol préparé à partir de celle-ci, à une matière sèche de 75 %. Le sirop est appliqué à une température de 60°C.
- une poudre de maltitol commercialisée par la Demanderesse sous la marque MALTISORB ^{R} et un sirop de maltitol préparé à partir de celle-ci, à une matière sèche de 65 %. Le sirop est appliqué également à une température de 60°C.

Les dragées obtenues dans les trois cas en moins d'une heure avec un taux de grossissage de 25 % environ, sont stockées pendant 2 jours avant d'être testées par le jury de dégustation de l'exemple 1.

Au niveau de la texture, les produits à base d'isomalt et de maltitol sont jugés très croustillants. Les dragées avec xylitol présentent un revêtement suffisamment dur mais moins croustillant.

Quant au goût, les produits dragéifiés avec xylitol et maltitol sont de loin préférés.

Dans l'ensemble, les chewing-gums revêtus de maltitol apparaissent présenter les meilleures caractéristiques organoleptiques.

## Revendications

1. Procédé de dragéification dure, lissage ou gommage, permettant la création par turbinage d'un revêtement dur à la surface d'un produit et comportant au moins un cycle comprenant :
- une étape d'application d'un sirop composé, par rapport à sa matière sèche soluble, d'au moins 90 % en poids d'un polyol choisi parmi le sorbitol, le maltitol, le mannitol, le xylitol l'érythritol, le lactitol et l'isomalt.
- au moins une étape d'application sous forme pulvérulente d'une poudre d'une pureté supérieure à 95 % en poids en ce même polyol ; lesdites étapes d'application étant menées dans un ordre quelconque.
- puis une étape de répartition du sirop et de la poudre appliqués,
caractérisé en ce que ce cycle ne comprend pas d'étape de séchage forcé par un flux d'air.

2. Procédé de dragéification dure selon la revendication 1, caractérisé en ce que la poudre appliquée présente une pureté supérieure à 98 %, de préférence supérieure à 99 %.

3. Procédé de dragéification dure selon la revendication 1 ou 2, caractérisé en ce que le sirop appliqué est préparé à partir de la poudre de polyol appliquée.

4. Procédé de dragéification dure selon la revendication 3, caractérisé en ce que le sirop comprenant la poudre appliquée contient également 0,5 à 5 % de gélatine, de gomme arabique ou de celluloses modifiées et éventuellement 0,5 à 2 % de pigments tels que le carbonate de calcium, l'oxyde de titane ou un solvant alimentaire.

5. Procédé d'enrobage selon la revendication 1, caractérisé en ce que le produit à revêtir ou déjà revétu est un produit alimentaire, un produit pour animaux, un produit pharmaceutique ou vétérinaire, un produit diététique, une semence ou une graine, une poudre d'engrais ou encore un additif à base d'enzymes, de microorganismes, de vitamines, d'arômes, de parfums, d'acides, d'édulcorants ou de principes actifs.

## Claims

1. Hard coating smoothing or gumming process, enabling the creation of a hard coating on the surface of a product by panning, and having at least one cycle comprising:
- a stage of application of a syrup composed of at least 90% by weight in relation to its soluble dry matter of a polyol chosen from amongst sorbitol, maltitol, mannitol, xylitol, erythritol, lactitol and isomalt,
- at least one stage of application in powder form, of a powder which has a purity higher than 95% by weight with respect to this same polyol; the said application stages being carried out in any order,
- then a stage during which the applied syrup and powder are spread evenly,
characterized in that this cycle does not comprise a stage of forced drying by air flow.

2. Hard coating process according to Claim 1, characterized in that the powder applied has a purity higher than 98%, preferably higher than 99%.

3. Hard coating process according to Claim 1 or 2, characterized in that the syrup applied is prepared from the polyol powder applied.

4. Hard coating process according to Claim 3, characterized in that the syrup comprising the powder applied also contains 0.5 to 5% of gelatine, gum arabic or modified celluloses and possibly 0.5 to 2% of pigments such as calcium carbonate, titanium oxide or a food solvent.

5. Coating process according to Claim 1, characterized in that the product to be coated or already coated is a food product, a product for animals, a pharmaceutical or veterinary product, a dietetic product, a seed or grain, a fertilizer powder or an additive based on enzymes, microorganisms, vitamins, flavourings, perfumes, acids, sweeteners or active ingredients.

## Patentansprüche

1. Verfahren zum harten Dragieren, Glätten oder Gummieren, das die Bildung eines harten Überzuges an der Oberfläche eines Produktes durch Zentrifugieren ermöglicht und mindestens einen Zyklus umfaßt, der in sich einschließt:
- eine Stufe des Auftragens eines Sirups, der zusammengesetzt ist, bezogen auf seine lösliche Trockensubstanz, aus mindestens 90 Gew.-% eines Polyols, ausgewählt unter Sorbitol, Maltitol, Mannitol, Xylitol, Erythritol, Lactitol und Isomalt;
- mindestens eine Stufe des pulverförmigen Auftragens eines Pulvers aus dem gleichen Polyol mit einer Reinheit von höher als 95 Gew.-%, wobei die genannten Stufen des Auftragens in beliebiger Reihenfolge durchgeführt werden;
- anschließend eine Stufe der Verteilung des aufgetragenen Sirups und des Pulvers,
dadurch gekennzeichnet, daß der Zyklus keine Stufe zur starken Trocknung mit Hilfe eines Luftstromes umfaßt.

2. Verfahren zum harten Dragieren nach Anspruch 1, dadurch gekennzeichnet, daß das aufgetragene Pulver eine Reinheit von höher als 98 %, vorzugsweise von höher als 99 % aufweist.

3. Verfahren zum harten Dragieren nach Anspruch 1 oder 2, dadurch gekennzeichnet, daß der aufgetragene Sirup ausgehend von dem verwendeten Polyol-Pulver hergestellt wird.

4. Verfahren zum harten Dragieren nach Anspruch 3, dadurch gekennzeichnet, daß der Sirup, der das verwendete Pulver umfaßt, ebenfalls 0,5 % bis 5 % Gelatine, Gummi arabicum oder modifizierte, Cellulose und gegebenenfalls 0,5 % bis 2 % Pigmente wie Calciumcarbonat, Titanoxid oder ein für die Ernährung geeignetes Lösungsmittel enthält.

5. Verfahren zum Umhüllen nach Anspruch 1, dadurch gekennzeichnet, daß das zu überziehende oder bereits überzogene Produkt ein Nahrungsmittelprodukt, ein Produkt für Tiere, ein pharmazeutisches oder veterinäres Produkt, ein diätetisches Produkt, ein Saatgut oder ein Samenkorn, ein Pulver aus Düngemittel oder auch ein Zusatzstoff auf der Basis von Enzymen, Mikroorganismen, Vitaminen, Aromastoffen, Parfums, Säuren, Süßstoffen oder Wirkstoffen ist.
